# EUROPEAN PATENT APPLICATION

(11) **EP 1 781 039 A2**
(43) Date of publication of application: **02.05.2007**
(21) Application number: 06123037.1
(22) Date of filing: 26.10.2006
(51) Int. Cl.: H04N 7/24

(54) **System and method for providing broadcasting service information in DVB-H system**

(30) Priority: 27.10.2005 KR 20050102057
(71) Applicant: Samsung Electronics Co., Ltd., Suwon-si, Gyeonggi-Do (KR)
(72) Inventor: Baek, Woo-Hyun c/o Samsung Electronics Co., Ltd., Gyeonggi-do (KR)
(74) Representative: Grünecker, Kinkeldey, Stockmair & Schwanhäusser Anwaltssozietät

(57) **Abstract**

A DVB-H (digital video broadcasting-handheld) service system and a method for providing broadcasting service information in the DVB-H service system are disclosed. The DVB-H service system includes a DVB-H server information center for storing address information of service providers or regional DVB-H service servers and providing DVB-H service server address information of a corresponding region; a terminal for receiving the DVB-H service server address information of the corresponding region from the DVB-H server information center and requesting broadcasting service information; and a DVB-H service server for providing requested broadcasting service information to the terminal through an IP (Internet protocol) network in response to request from the terminal for broadcasting service information.

## Description

The present invention relates to a DVB-H (digital video broadcasting-handheld) service system and a method for providing broadcasting service information in the DVB-H service system.

DVB-H service is a broadcasting service for a handheld terminal, which has been newly developed by the DVB (digital video broadcasting) organization for standardization of a digital TV broadcasting scheme in Europe, following DVB-S (digital video broadcasting-satellite) TV, DVB-C (digital video broadcasting-cable) TV and the DVB-T (digital video broadcasting-terrestrial) TV

The DVB-H service has been developed in consideration of the fact that multimedia contents such as movies, broadcasting dramas, and the like, cannot be properly provided to a handheld terminal through the UMTS (universal mobile telecommunications system), DVB-T TV or DAB (digital audio broadcasting).

The goal of the DVB-H service is to allow a handheld terminal user to receive and watch a clear image having image quality of 96 Kbps to 384 Kbps while moving at a high speed. The DVB-H service adopts a time division multiplexing scheme in order to reduce power consumption of the handheld terminal. The time division technique is a type of digital multiplexing, in which the capacity of a transmission path is divided into predetermined time slots and packet broadcasting signals are assigned to the respective time slots to be transmitted.

In the DVB-H service, PSI (program specification information) is transmitted in a state in which it is included in a TS (transport stream). The PSI is detailed program information and includes information such as video data and audio data, channel decoding and program information, teletext information, etc.

If a DVB-H terminal receives the PSI, it is possible to obtain desired data from the PSI using a PAT (program association table), PMT (program map table), TDT (time and date table), NIT (network information table), BAT (bouquet association table), or EIT (event information table) contained therein.

At this time, the DVB-H terminal can obtain the PID (program identification) of the PMT from the PAT. Further, the PIDs of respective actual transport streams can be obtained from the PMT, and time information can be obtained from the TDT. Also, network information can be obtained from the NIT. The information of a corresponding program provider and the channel information of the program provider can be obtained from the BAT. Moreover, the name and information of a service can be obtained from an SDT (service description table), and the channel guide information actually required in an EPG (electronic program guide) can be obtained from the EIT.

Hence, the DVB-H terminal receives DVB-H broadcasting after reading the PID of the PMT from the PAT, and reading the PID of the actual audio/video data service from the PMT, using the PID of the corresponding service.

However, in the DVB-H service as described above, broadcasting service information is provided based on information transmitted from a satellite or a base station through a broadcasting service network (an independent network). At this time, a user must know beforehand the frequency of the broadcasting service.

In this regard, although no problem is caused in the case that the broadcasting frequency is already known as in certain territories or countries, if a user moves to another country or territory while receiving the DVB-H service, the user must know in advance the information regarding the broadcasting frequency, the broadcasting service, etc. from other media (such as the Internet or a broadcasting magazine) and set the handheld terminal to conform with the known information.

Also, in a system using the existing networks such as a LAN, Bluetooth, a WLAN (WiBro), a 3.5G system (HSDPA) or a 4G System, a method for conveniently searching the DVB-H service does not exist.

That is to say, in the conventional DVB service (such as DVB-T, DVB-S, and so forth), it is possible to obtain actual audio and video data and the data channel information only after acquiring the PMT PID by reading-in the PAT (PID:0x00) table which is periodically loaded on a TS packet. Also, the EPG and the channel information such as an ESG (electronic service guide) can be obtained only after the corresponding packet is received.

Therefore, when changing a transponder or a channel, it is possible to obtain channel information only after the TS packet is received. In this regard, since the user must wait until the TS packet is received, a problem is caused in that several seconds are required to change the transponder or the channel, thus interrupting viewing.

Recently, in order to address this problem, a method has been disclosed, in which simple PSI information for a corresponding service channel is stored in a ROM (read only memory), a flash memory or a hard disk to shorten a channel change time.

However, even in this method, substantial time is required to initially store the PSI information for the corresponding service channel in the ROM. Further, in the case that several thousands of channels exist, required data size significantly increases, and the procedure for searching a specific service channel among the several thousands of channels is complicated. Also, in order to store and search the information for the minimum number of transponders (several tens of transponders exist for each satellite in the case of DVB-S), the user must still wait at least several minutes. Moreover, if various information of the corresponding channel is changed in real time, a problem is caused in that erroneous information stored in the existing memory can be provided.

Accordingly, the present invention has been made to solve the above-mentioned problems occurring in the prior art.

It is the object of the present invention to provide a DVB-H service system which can increase user convenience and can provide information for DVB-H broadcasting service irrespective of a position of the terminal throughout the world, and a method for providing broadcasting service information in the DVB-H service system.

This object is solved by the subject matter of the independent claims.

Preferred embodiments are defined by the subject matter of the dependent claims.

An aspect of the present invention is to provide a DVB-H service system which enables quick change of a transponder and a channel, and a method for providing broadcasting service information in the DVB-H service system.

Another aspect of the present invention is to provide a DVB-H service system which can efficiently and quickly provide broadcasting service information, and a method for providing broadcasting service information in the DVB-H service system.

In order to achieve the above, according to one aspect of the present invention, there is provided a DVB-H (digital video broadcasting-handheld) service system which includes a DVB-H server information center for storing address information of service providers or regional DVB-H service servers and providing DVB-H service server address information of a corresponding region; a terminal for receiving the DVB-H service server address information of the corresponding region from the DVB-H server information center and requesting broadcasting service information; and a DVB-H service server for providing requested broadcasting service information to the terminal through an IP (Internet protocol) network in response to a request from the terminal for broadcasting service information.

In order to achieve the above, according to another aspect of the present invention, there is provided a method for providing broadcasting service information in a DVB-H (digital video broadcasting-handheld) service system, which includes receiving DVB-H service server address information corresponding to subscriber information and position information of a terminal from a DVB-H server information center by the terminal; and receiving broadcasting service information from a corresponding DVB-H service server through an IP (Internet protocol) network by the terminal, using the DVB-H service server address information.

The present invention will be more apparent from the following detailed description when taken in conjunction with the accompanying drawings, in which:
FIG. 1 is a block diagram illustrating the configuration of a DVB-H service system in accordance with of the present invention;
FIG. 2 is a flow chart illustrating a method for providing broadcasting service information in the DVB-H service system according to the present invention;
FIG. 3 is a view illustrating an example of a broadcasting service information request message format in a DVB-H terminal according to of the present invention; and
FIG. 4 is a view illustrating an example of a broadcasting service information response message format from a DVB-H server according to the present invention.

Hereinafter, a preferred embodiment of the present invention will be described with reference to the accompanying drawings. The same component parts will be designated by the same reference numerals although they are shown in different drawings. In the following description of the present invention, only the parts necessary for understanding of the operations and functions of the present invention will be explained, and the explanation for the other parts will be omitted so that they do not make the subject matter of the present invention unclear.

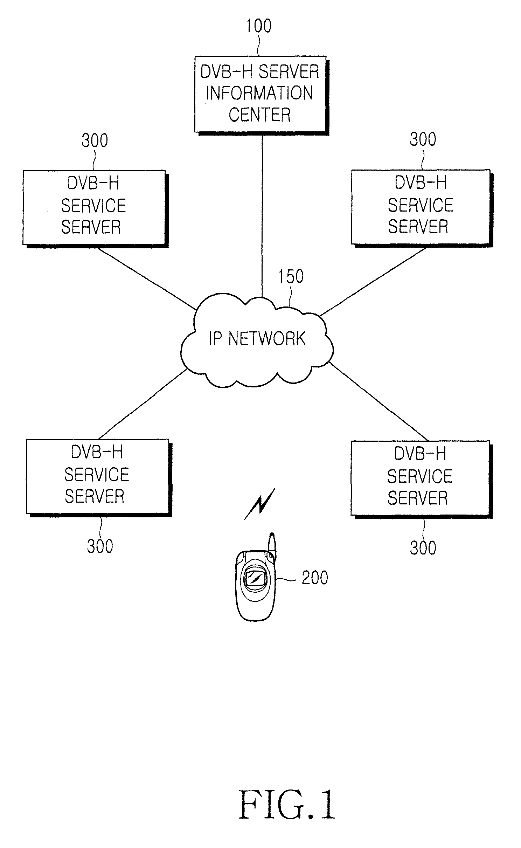

FIG. 1 is a block diagram illustrating the configuration of a DVB-H service system in accordance with the present invention.

Referring to FIG. 1, a DVB-H service system includes a DVB-H server information center 100, an IP (Internet protocol) network 150, a DVB-H terminal 200, and DVB-H service servers 300.

The DVB-H server information center 100 stores address information (for example, the IP addresses) of respective service providers or regional DVB-H service servers 300, and can be realized as a common website (for example, 'dvbh_service.org') which can be accessed throughout the world. If it is confirmed on the basis of subscriber information and position information of the DVB-H terminal 200 that the DVB-H terminal 200 is within a DVB-H service region, the DVB-H service information center 100 provides to the DVB-H terminal 200 the address information of the DVB-H service server 300 which resides in the corresponding region.

The IP network 150 provides communication services using an Internet protocol and can provide IPv6 network service. The IP network 150 connects the DVB-H server information center 100 with the DVB-H service servers 300.

The DVB-H terminal 200 accesses the IP network 150 using the IP network service, in particular, the IPv6 network service such as a wireless LAN (WLAN), Bluetooth, portable Internet (WiBro), a 3G system, a 3.5G system, a 4G system, and so forth. After having access to the IP network 150, the DVB-H terminal 200 communicates with the DVB-H server information center 100 and the DVB-H service servers 300. When the DVB-H terminal 200 moves between regions or a transponder thereof is altered so that various settings such as a broadcasting frequency, a channel, and the like must be changed, the DVB-H terminal 200 provides its subscriber information and position information to the DVB-H server information center 100. Thereafter, the DVB-H terminal 200 receives from the DVB-H server information center 100 the information of a DVB-H server 300 which corresponds to the subscriber information and the position information and then requests broadcasting service information from the DVB-H server 300. For example, the DVB-H terminal 200 can request PSI (program specification information) from the corresponding DVB-H server 300. At this time, the DVB-H terminal 200 can request the entire PSI or desired partial PSI. If the DVB-H terminal 200 can receive DVB-H service through the IP network 150, the DVB-H terminal 200 can request the DVB-H service from the DVB-H server 300 and receive the DVB-H service through the IP network 150.

The DVB-H server 300 provides DVB-H service to the corresponding service provider or to the corresponding region. In response to the request from the DVB-H terminal 200 for the broadcasting service information, the DVB-H server 300 provides the requested broadcasting service to the DVB-H terminal 200 through the IP network 150. For example, in response to the request from the DVB-H terminal 200 for PSI, the DVB-H server 300 provides the PSI to the DVB-H terminal 200 through the IP network 150. At this time, the DVB-H server 300 can provide the entire PSI or desired partial PSI. When it is possible to provide DVB-H service through the IP network 150, in response to the request from the DVB-H terminal 200, the DVB-H server 300 provides DVB-H service through the IP network 150.

Hence, the DVB-H service providing system according to the present invention can provide the information of the DVB-H service server 300 based on the position of the DVB-H terminal 200 so that the DVB-H terminal 200 can receive the corresponding broadcasting service information irrespective of its position throughout the world. Moreover, the DVB-H service providing system according to the present invention can provide broadcasting service information (for example, PSI, etc.) to the DVB-H terminal 200 through the IP network 150 so that the DVB-H terminal 200 can quickly and efficiently receive the broadcasting service information.

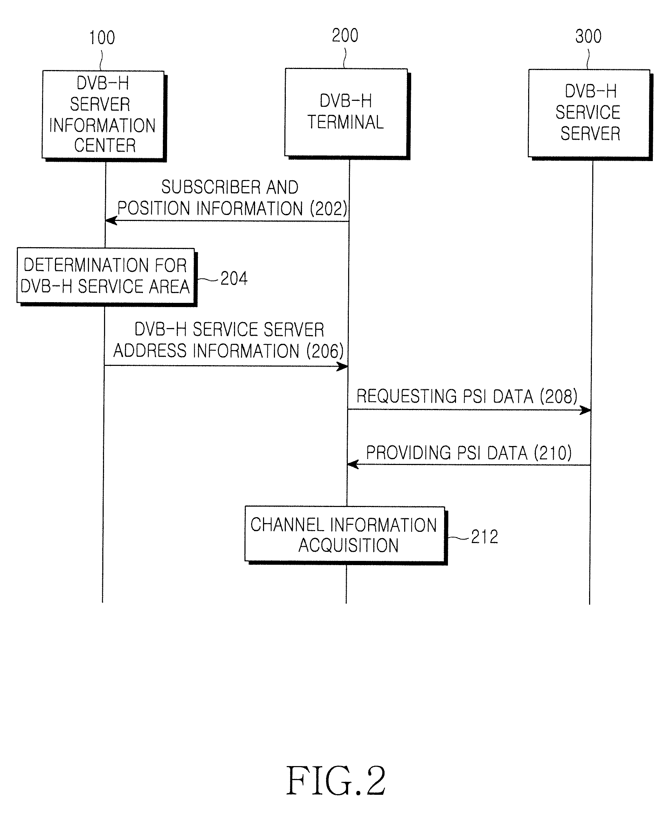

Hereinafter, a method for providing broadcasting service information in the DVB-H service system according to the present invention will be described in detail with reference to the flowchart of FIG 2 Referring to FIG 2, when the DVB-H terminal 200 moves between regions or a transponder thereof is altered so that various settings such as a broadcasting frequency, a channel, and the like must be changed, the DVB-H terminal 200 provides its subscriber information and position information to the DVB-H server information center 100 at step 202.

For example, in order to provide the subscriber information and the position information to the DVB-H server information center 100, the DVB-H terminal 200 can transmit data stored in a SIM (subscriber identification module) card to the DVB-H server information center 100. Explaining the data stored in the SIM, the subscriber information such as MSISDN and IMSI is stored in the SIM. MSISDN designates a phone number. IMSI designates international mobile subscriber identity. The IMSI can be constituted by no greater than 15 digits and includes 3 digits for an MCC (mobile country code), 2 digits for an MNC (mobile network code) and 10 digits for an MSIN (mobile subscriber identification number). For example, IMSI can be constituted as given in Table 1 below.

**Table 1**

| MCC | COUNTRY | MNC | NETWORK |
|---|---|---|---|
| 505 | Australia | 01 | telecom Australia |
| 262 | Germany | 01 | D1-telecom |
| 262 | Germany | 02 | D2 privat |
| 222 | Italy | 01 | I SIP |
| 204 | Netherlands | 08 | NL PTT |

In the case of a CDMA system, in order to provide the subscriber information and the position information to the DVB-H server information center 100, the DVB-H terminal 200 can transmit service provider information to the DVB-server information center 100.

If the subscriber information and the position information from the DVB-H terminal 200 is received by the DVB-H server information center 100, the DVB-H server information center 100 determines based on the subscriber information and the position information whether the position of the DVB-H terminal 200 is within a DVB-H service region at step 204.

Then, the DVB-H server information center 100 provides the address information of the DVB-H service server 300 of the corresponding region to the DVB-H terminal 200 at step 206.

After the DVB-H terminal 200 receives the address information of the DVB-H service server 300 of the corresponding region from the DVB-H server information center 100, the DVB-H terminal 200 is connected to the DVB-H service server 300 of the corresponding region through the IP network 150.

After being connected to the DVB-H service server 300 of the corresponding region, the DVB-H terminal 200 sends a request for broadcasting service information (for example, PSI) to the DVB-H service server 300 at step 208.

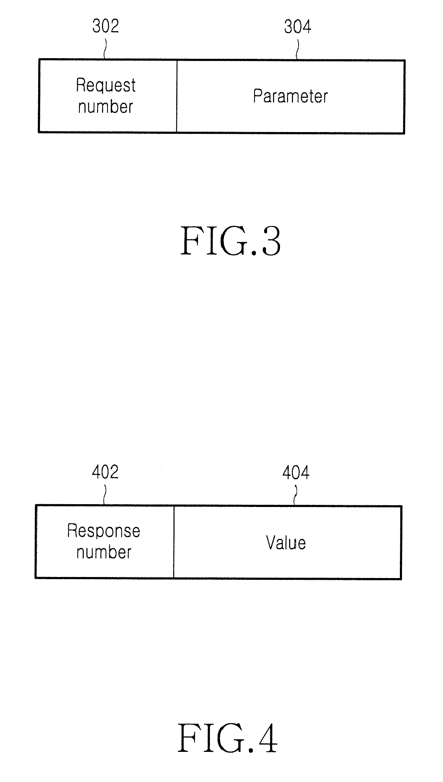

FIG. 3 is a view illustrating an example of a broadcasting service information request message format in the DVB-H terminal 200 according to the present invention.

Referring to FIG 3, the broadcasting service information request message format of the DVB-H terminal 200 includes a REQUEST NUMBER field 302 and a PARAMETER field 304.

The REQUEST NUMBER field 302 includes information regarding what broadcasting service information is to be requested. The PARAMETER field 304 includes parameters which are to be transmitted to the DVB-H service server 300 in order to receive the broadcasting service information as requested.

Referring back to FIG. 2, if the broadcasting service information request message is received from the DVB-H terminal 200, the DVB-H service server 300 transmits the corresponding broadcasting service information through the IP network 150 to the DVB-H terminal 200 at step 210.

FIG. 4 is a view illustrating an example of a broadcasting service information response message format from the DVB-H server 300 according to the present invention.

Referring to FIG. 4, the broadcasting service information response message format from the DVB-H server 300 includes a RESPONSE NUMBER field 402 and a VALUE field 404.

The RESPONSE NUMBER field 402 includes information regarding what broadcasting service information is to be provided. The VALUE field 404 includes the contents of the broadcasting service information provided.

Referring again to FIG 2, the DVB-H terminal 200 receives the broadcasting service information transmitted from the DVB-H service server 300 through the IP network 150, and changes the settings such as a broadcasting frequency, a channel, etc. using the broadcasting service information at step 212.

In the method for providing broadcasting service information in the DVB-H service system according to the present invention, the detailed example of the broadcasting service information which is provided and received by the DVB-H service server 300 and the DVB-H terminal 200 is given in Table 2 below.

**Table 2**

| DVB-H terminal | | DVB-H service server | |
|---|---|---|---|
| Request Number | Parameter | Response Number | Value |
| 0 | None | 0 | Entire PSI table data |
| 1 | PID of PSI table | 1 | Corresponding PSI table value |
| 2 | Position information | 2 | Whether DVB-H service is possible at corresponding position |
| 3 | None | 3 | RF value |
| 4 | None | 4 | IP and address when DVB-H service is possible through IP network |

Five examples are illustrated in Table 2.

'0' represents the case in which the DVB-H terminal 200 sends a request foran entire PSI to the DVB-H service server 300. In the case that the DVB-H terminal 200 requests the entire PSI from the DVB-H service server 300, the DVB-H service server 300 transmits entire data of a PSI table to the DVB-H terminal 200.

At this time, when the data to be transmitted is greater than 1K, the DVB-H service server 300 cannot transmit the entire data of the PSI table at one time. In this case, the DVB-H service server 300 transmits the entire data by dividing the entire data into data pieces and indicates on a first byte whether there is remaining data to be transmitted. For example, when there is remaining data to be transmitted, the value of the first byte can be '1', and when there is no remaining data to be transmitted, the value of the first byte can be '0'. In this way, the entire data of the PSI table can be transmitted.

'1' represents the case in which the DVB-H terminal 200 sends a request for a partial PSI to the DVB-H service server 300. In the case that the DVB-H terminal 200 requests partial PSI from the DVB-H service server 300, the request is transmitted with the PID of the PSI table included in the PARAMETER field.

Then, the DVB-H service server 300 transmits to the DVB-H terminal 200 the value corresponding to the PID of the PSI table transmitted from the DVB-H terminal 200. For example, when the PID of the PSI table transmitted from the DVB-H terminal 200 is 0, the DVB-H service server 300 transmits a PAT value. Further, when the PID of the PSI table transmitted from the DVB-H terminal 200 is 1, the DVB-H service server 300 transmits a CAT [PLEASE IDENTIFY.] value, and when the PID of the PSI table transmitted from the DVB-H terminal 200 is ox20, the DVB-H service server 300 transmits an SDT table. This follows the Table PID of the MPEG2-TS.

'2' represents the case in which the DVB-H terminal 200 sends a request to the DVB-H service server 300 for information on whether DVB-H service is possible at the corresponding position. When the DVB-H terminal 200 requests from the DVB-H service server 300 the information whether DVB-H service is possible at the corresponding position, the DVB-H terminal 200 transmits the request with its position information included in the PARAMETER field.

Then, the DVB-H service server 300 determines based on the position information transmitted from the DVB-H terminal 200 whether DVB-H service is possible at the position of the DVB-H terminal 200, and transmits the determination result to the DVB-H terminal 200. For example, the DVB-H service server 300 transmits to the DVB-H terminal 200 the information regarding whether DVB-H service is possible and whether DVB-H service using an IP network is possible. At this time, if DVB-H service is not possible, the information is transmitted with '00' included in the VALUE field to indicate the corresponding situation. If the DVB-H service is possible but the DVB-H service using the IP network is not possible, the information is transmitted with '10' included in the VALUE field to indicate the corresponding situation. If both of the DVB-H service and the DVB-H service using the IP network are possible, the information is transmitted with '11' included in the VALUE field to indicate the corresponding situation.

'3' represents the case in which the DVB-H terminal 200 sends a request to the DVB-H service server 300 for a radio frequency value at the corresponding position. In the case that the DVB-H terminal 200 requests from the DVB-H service server 300 a radio frequency value, the DVB-H service server 300 transmits to the DVB-H terminal 200 the corresponding information with the total number of RF values and the radio frequency value usable at the corresponding position included in the VALUE field.

'4' represents the case in which the DVB-H terminal 200 sends a request to the DVB-H service server 300 for a specific DVB-H service when the DVB-H service using the IP network is possible. When the specific DVB-H service is requested, the DVB-H service server 300 transmits the corresponding information with the name and the address of an IP providing the requested specific DVB-H service included in the VALUE field. If the requested specific DVB-H service cannot be provided, the information (for example, '0') indicating the corresponding situation is included in the VALUE field.

Accordingly, in the method for providing broadcasting service information in the DVB-H service system according to the present invention, the broadcasting service information (for example, the PSI, whether the DVB-H service is possible at the corresponding position, the radio frequency information at the corresponding position, and the name and the address of the IP network providing the specific DVB-H service) can be collectively provided (to the DVB-H terminal (200)), user convenience can be improved, and it is not necessary for a user to wait so as to acquire desired information as in the conventional art.

That is to say, in the conventional art, PSI, audio data, video data and channel information are mixed in a TS, and PSI tables are periodically mixed in the TS. Therefore, in order to obtain the desired PSI by periodically receiving the TS, a lengthy period is required.

For example, 32 predefined PSI tables exist in the TS, and after the 32 predefined PSI tables, the PMT PID, actual audio, video, data, teletext PID, etc. exist. Thus, assuming that a PSI table period is 0.2 seconds, when there are N channels, in order to obtain entire PSI tables, 32+N seconds are required. Also, assuming that the number of the EITs is M, in order to obtain the entire PSI tables, 0.2*(32+N+M)=6.4+0.2*(N+M) seconds are required.

Further, if 10 channels are serviced for each transponder (N=10) and 20 EITs are received (M=20), 12.4 seconds are required to wait for all PSI tables. When considering the operation time and the processing delay time, in a territory in which a broadcasting state is unstable, increased time is required to obtain the channels of the transponder and all PSI information.

Thus, instead of receiving the broadcasting service information including the PSI and channel information as in the conventional art, by collectively receiving the broadcasting service information through an IP network as in the present invention, it is possible to constitute PSI information within a short period, whereby a channel can be quickly changed and an EPG can be quickly provided.

As is apparent from the above description, in the present invention, since the information of a DVB-H service server can be provided in conformity with the position of a DVB-H terminal, the DVB-H terminal can receive the corresponding broadcasting service information irrespective of its position throughout the world.

Also, in the present invention, because the broadcasting service information is provided to the DVB-H terminal through an IP network, the DVB-H terminal can efficiently and quickly receive the broadcasting service information.

Moreover, in the present invention, due to the fact that the DVB-H terminal can efficiently and quickly receive the broadcasting service information, user convenience is improved, and a transponder and a channel can be quickly changed.

Although the present invention is described in context with a DVB-H (Digital Video Broadcasting - Handheld) service system, according to a further embodiment of the present invention, another technique can be used to bring broadcast services to handheld receivers. While the present invention has been shown and described with reference to certain preferred embodiments thereof, it will be understood by those skilled in the art that various changes in form and details may be made therein without departing from the scope of the present invention as defined by the appended claims.

## Claims

1. A DVB-H service system comprising:
a DVB-H server information center for storing at least one of address information of service providers and regional DVB-H service servers and providing DVB-H service server address information of a corresponding region;
a terminal for receiving the DVB-H service server address information of the corresponding region from the DVB-H server information center and requesting broadcasting service information; and
a DVB-H service server for providing requested broadcasting service information to the terminal through an IP network in response to a request from the terminal for broadcasting service information.

2. The DVB-H service system as set forth in claim 1, wherein the IP network provides IPv6 network service.

3. The DVB-H service system as set forth in claim 1 or 2, wherein the broadcasting service information includes program specification information regarding whether DVB-H service is possible, radio frequency information, and specific DVB-H service information which is requested to be provided.

4. The DVB-H service system as set forth in claim 3, wherein the DVB-H service server provides entire program specification information to the terminal through the IP network in response to a request from the terminal for the entire program specification information.

5. The DVB-H service system as set forth in claim 3, wherein the DVB-H service server provides partial program specification information to the terminal through the IP network in response to a request from the terminal for the partial program specification information.

6. The DVB-H service system as set forth in claim 3, wherein the DVB-H service server determines whether DVB-H service is possible at a position of the terminal in response to a request from the terminal for the information regarding whether DVB-H service is possible at the corresponding position, and provides the information regarding whether DVB-H service is possible, to the terminal through the IP network.

7. The DVB-H service system as set forth in claim 3, wherein the DVB-H service server searches radio frequency information which can be used at a position of the terminal in response to a request from the terminal for the radio frequency information, and provides the searched radio frequency information to the terminal through the IP network.

8. The DVB-H service system as set forth in claim 3, wherein the DVB-H service server provides to the terminal through the IP network an IP address from which the desired specific DVB-H service information is provided, in response to a request from the terminal for specific DVB-H service information.

9. A method for providing broadcasting service information in a DVB-H service system, comprising the steps of:
receiving DVB-H service server address information corresponding to subscriber information and position information of a terminal from a DVB-H server information center by the terminal; and
receiving broadcasting service information from a corresponding DVB-H service server through an IP network by the terminal, using the DVB-H service server address information.

10. The method as set forth in claim 9, wherein the step of receiving DVB-H service server address information by the terminal comprises :
providing the subscriber information and position information of the terminal to the DVB-H server information center by the terminal to receive DVB-H service; and
providing DVB-H service server address information corresponding to the subscriber information and position information of the terminal by the DVB-H server information center.

11. The method as set forth in claim 9 or 10, wherein the step of receiving broadcasting service information by the terminal comprises:
requesting broadcasting service information from the corresponding DVB-H service server by the terminal, using the DVB-H service server address information; and
providing requested broadcasting service information to the terminal through the IP network by the DVB-H service server.

12. The method as set forth in one of claims 9 to 11, wherein the IP network provides IPv6 network service.

13. The method as set forth in one of claims 9 to 12, wherein the broadcasting service information includes program specification information regarding whether DVB-H service is possible, radio frequency information, and specific DVB-H service information which is requested to be provided.

14. The method as set forth in claim 13, wherein the step of receiving program specification information by the terminal comprises:
requesting entire program specification information from the corresponding DVB-H service server by the terminal, using the DVB-H service server address information; and
providing the requested entire program specification information through the IP network to the terminal by the DVB-H service server.

15. The method as set forth in claim 13, wherein the step of receiving program specification information by the terminal comprises:
requesting partial program specification information from the corresponding DVB-H service server by the terminal, using the DVB-H service server address information; and
providing the requested partial program specification information through the IP network to the terminal by the DVB-H service server.

16. The method as set forth in claim 13, wherein the step of receiving information regarding whether DVB-H service is possible by the terminal comprises:
requesting information regarding whether DVB-H service is possible from the corresponding DVB-H service server by the terminal, using the DVB-H service server address information;
determining whether DVB-H service is possible for the terminal by the DVB-H service server; and
providing the requested information regarding whether DVB-H service is possible, through the IP network to the terminal.

17. The method as set forth in claim 13, wherein the step of receiving radio frequency information by the terminal comprises:
requesting radio frequency information from the corresponding DVB-H service server by the terminal, using the DVB-H service server address information;
determining radio frequency information to be used for the terminal by the DVB-H service server; and
providing the requested radio frequency information through the IP network to the terminal.

18. The method as set forth in claim 13, wherein the step of receiving specific DVB-H service information by the terminal comprises:
requesting specific DVB-H service information from the corresponding DVB-H service server by the terminal, using the DVB-H service server address information;
searching for an IP address providing the specific DVB-H service information by the DVB-H service server; and
providing the specific DVB-H service information to the terminal through the IP network.
